# EUROPEAN PATENT SPECIFICATION

(11) **EP 3 771 777 B1**
(45) Date of publication and mention of the grant of the patent: **28.09.2022**
(21) Application number: 20188248.7
(22) Date of filing: 28.07.2020
(51) Int. Cl.: E03C 1/186, A47J 47/20, E03C 1/262, E03C 1/264

(54) **SINK STRAINER**
SPÜLENSIEB
FILTRE POUR ÉVIER

(30) Priority: 29.07.2019 GB 201910813
(43) Date of publication of application: 03.02.2021
(73) Proprietor: Mechline Developments Limited, Milton Keynes MK10 0DE (GB)
(72) Inventor: TULIP, Kevin, Milton Keynes, Buckinghamshire MK10 0DE (GB); FALCO, Nick, Milton Keynes, Buckinghamshire MK10 0DE (GB)
(74) Representative: Raynor, Simon Mark

(56) References cited:
- GB-A- 2 165 146
- KR-A- 20150 024 802
- KR-B1- 101 340 091
- US-A- 1 842 289
- US-A- 2 635 252
- US-A- 4 336 620
- US-B1- 9 869 076

## Description

The present invention relates to a sink strainer for a sink having a waste drain. In particular, but not exclusively, the invention relates to a sink strainer for use in a sink that is used in a commercial kitchen or similar establishment.

US6276000 describes a combined sink strainer and stopper device. The device is of a kind referred to herein as an upstand strainer.

The device in US6276000 is designed to be located in a sink drain and includes a valve that is operable to permit or prevent the flow of waste water into the drain. It includes a strainer that can separate food waste from the waste water flowing into the drain when the valve is opened. The food waste then collects in the sink and can be removed by hand once the waste water has flowed away. However, this is a messy and time-consuming operation. To avoid this operation, users may sometimes remove the entire strainer device from the sink drain. However, this allows food waste to enter the drain, possibly causing a blockage.

GB 2165146 A describes a sink strainer made a flexible material that covers a sink drain hole. Perforations in the strainer allow water to run out of the drain hole.

US 9869076 B1 describes a combined sink strainer and stopper with a strainer cup that has openings to provide for straining of debris.

US2635252 A describes a sink dish protector comprising a flexible sink liner with a drain opening and a pivoting cover for the drain opening.

It is an object of the present invention to provide a strainer for a sink that mitigates one or more problems associated with existing strainer devices, such as, for example, the problems described above.

The present invention is defined by the appended claims.

An embodiment of the invention will now be described by way of example with reference to the accompanying drawings, wherein:
Fig. 1 is an isometric view of the sink strainer from above,
Fig. 2 is an isometric view of a drain closure,
Fig. 3 is an isometric view of a drain cover,
Fig. 4 is an isometric view of the sink strainer in a partially disassembled condition,
Fig. 5 is an isometric view of the drain cover,
Fig. 6 is an isometric view of a drain cover aligned with an upstand strainer S and a sink waste drain D,

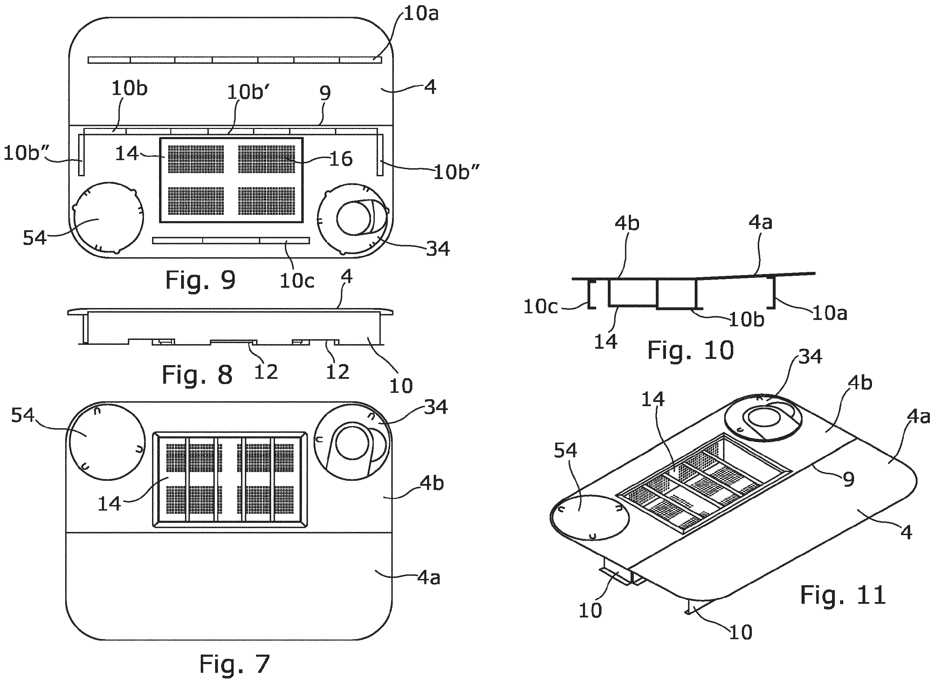

Fig. 7 is a top plan view of the sink strainer, omitting a base seal,
Fig. 8 is a front elevation of the sink strainer,
Fig. 9 is a bottom plan view of the sink strainer,
Fig. 10 is a side elevation of the sink strainer,
Fig. 11 is an isometric view of the sink strainer,

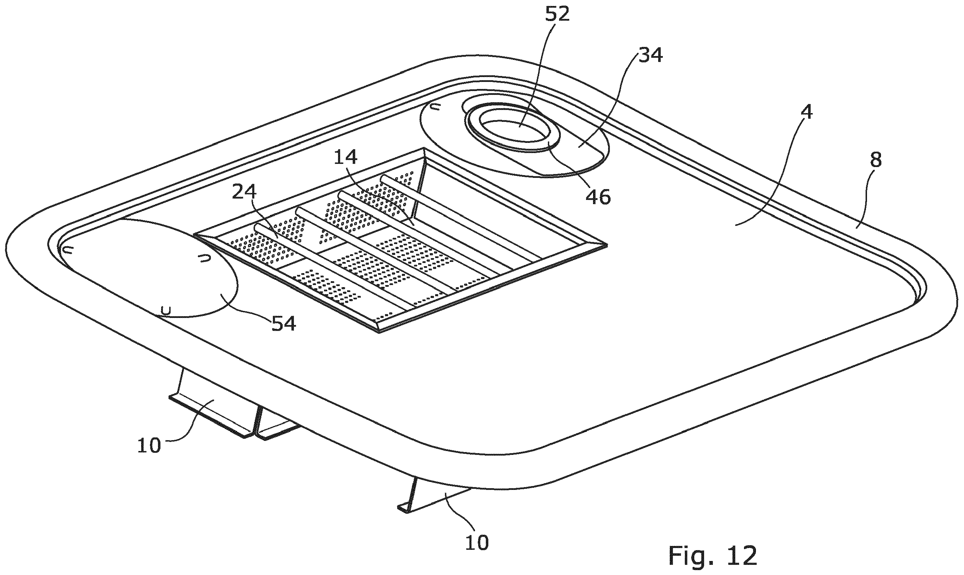

Fig. 12 is an isometric view of the sink strainer from above, including the base seal,

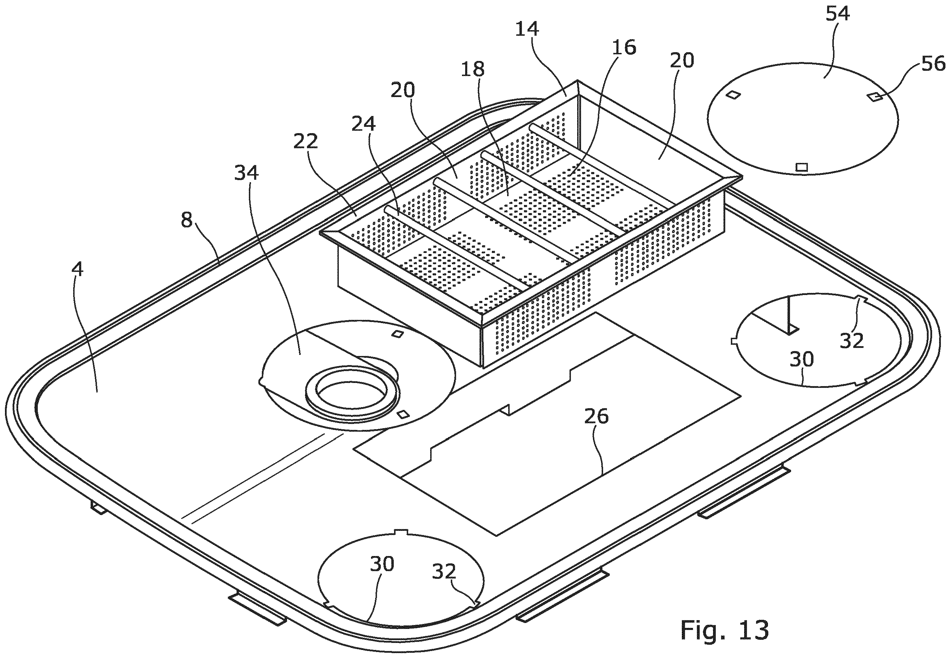

Fig. 13 is an isometric view of the sink strainer from above, in a partially disassembled state,
Fig. 14 is an isometric view of a first cover element, and
Fig. 15 is an isometric view of a second cover element.

The sink strainer 2 illustrated in the drawings is designed to fit within a sink (or basin) having a drain (or waste) outlet. The sink strainer 2 is intended primarily (but not exclusively) for use in commercial kitchens or similar establishments, where sinks used for washing up dishes tend to have approximately similar shapes and sizes. For example, the sink strainer 2 may be designed to fit sink bowls that are between 580mm and 610mm in length and between 430mm and 460mm in width. However, it may alternatively be designed to fit different sized sink bowl.

Sinks used in commercial kitchens and similar establishments tend to be either left- or right-handed and have a sink waste drain located either in the rear left corner or the rear right corner of the sink bowl. Such sinks typically have a 1.5" (40mm) waste outlet, although other sizes also exist.

In the embodiment shown in the drawings the sink strainer 2 includes a base element 4. The base element 4 may for example be made of stainless steel, although it may alternatively be made of other materials, for example of a plastics material. Generally, the base element 4 has a substantially rectangular plate-like form with rounded corners and is designed to fit within a sink bowl adjacent to the bottom of the bowl.

The base element 4 has a peripheral edge 6, which is designed to fit closely between the sides of the sink bowl. A seal 8, which may for example be made of rubber or a similar material, is mounted on the peripheral edge 6 and is configured to provide a seal with one or more sides of the sink bowl. The seal 8 need not be entirely water-tight, but it should be sufficiently tight to prevent food waste from passing around the edge 16 of the base element 4 into the space below the base element.

Optionally, as shown in the drawings, the base element 4 may be divided by a crease line 9 into a front portion 4a and a rear portion 4b, wherein the front portion 4a is inclined slightly upwards relative to the rear portion 4b so that water tends to flow rearwards from the front portion 4a towards the rear portion 4b.

The sink strainer 2 includes one or more supports 10 provided on the underside of the base element 4, which support the base element 4 above the base of the sink bowl. The supports 10 may for example take the form of vertical walls, which may for example be made of stainless steel strips that are welded to the lower surface of the base element 4. Alternatively, the supports 10 may take other forms, for example legs.

In this embodiment the supports 10 include a plurality of cut-outs 12 in their lower edges, which allow water to flow unimpeded towards the sink waste.

In the embodiment shown in the drawings, three supports 10 are provided, comprising a front support 10a adjacent to the front edge of the base element 4, a second support 10b that extends across the middle of the base element 4 and a third support 10c located adjacent to the rear edge of the base element 4. In this embodiment the second support 10b includes a central portion 10b' that extends across the width of the base element 4 and two end portions 10b" that extend parallel to the side edges of the base element 4. The first and third supports 10a and 10c extend generally parallel to the front and rear edges of the base element. It will be appreciated however that the supports 10 may take alternative forms.

The sink strainer 2 includes a strainer element 14 having one or more perforations 16. In the illustrated embodiment the strainer element 14 comprises a basket having numerous perforations 16. The basket has a base 18, four peripheral walls 20 and a rim 22 that extends outwards from the upper edges of the walls 20. The strainer element 14 may for example be made of stainless steel, or another suitable material. A plurality of perforations 16 may be formed in the base 18 and optionally in one or more of the walls 20. The perforations 16 allow water to flow through the strainer element 14 but retain particles of food waste that are too large to pass through the perforations.

In the illustrated embodiment a plurality of bars 24 are provided that extend across the top of the strainer element 14, to prevent large items (for example cutlery) from entering the strainer element 14.

In the illustrated embodiment the strainer element 14 is removably mounted within a strainer window 26 in the base element 4. The strainer element 14 may for example sit within the strainer window 26 with the rim 22 resting on the upper surface of the base element 4, so that the base 18 and the walls 20 of the strainer element 14 are located below the upper surface of the base element 4.

The strainer element 14 may be lifted out of the strainer window 26 and removed to allow food waste to be emptied. The bars 24 if provided, may be used to grasp the strainer element 14.

Alternatively, the strainer element 14 may be permanently attached to the base element 4 or formed integrally therewith. In that case, the entire sink strainer 2 may be removed from the sink bowl to empty food waste from the strainer element 14.

The base element 4 includes at least one drain aperture 30, which is positioned so that in use it is aligned substantially with a waste outlet drain D of a compatible sink. Typically, the drain aperture 30 will be located adjacent to a rear corner of the base element 4. Optionally, the base element 4 may include two or more drain apertures 30. In the illustrated embodiment the base element 4 includes two drain apertures 30, which are located adjacent to the two rear corners of the base element 4, so that the sink strainer 2 can be used with either a right-handed or a left-handed compatible sink.

In the illustrated embodiment, each drain aperture 30 comprises a circular hole, which has a diameter substantially larger than a standard waste drain. For example, the drain aperture 30 may have a diameter in the range of about 100mm-150mm, whereas a standard waste drain typically has a diameter of 40mm. In the illustrated embodiment the drain aperture 30 has a diameter of 120mm.

In the illustrated embodiment a plurality of cut-outs 32 are provided around the edge of the drain aperture 30. In the example three cut-outs 32 are provided, which are equally spaced from one another. It will be appreciated that the number and spacing of the cut-outs may be changed.

The sink strainer 2 includes at least one drain cover 34 associated with at least one drain aperture 30 in the base element 4. In the illustrated embodiment the drain cover 34 is configured to be removably mounted over the drain aperture 30. However, it may alternatively be permanently mounted within or over the drain aperture 30.

The drain cover 34 includes a first cover element 36 and a second cover element 38. The first cover element 36 is configured for rotation relative to the base element 4, and the second cover element 38 is configured for linear movement relative to the first cover element 36.

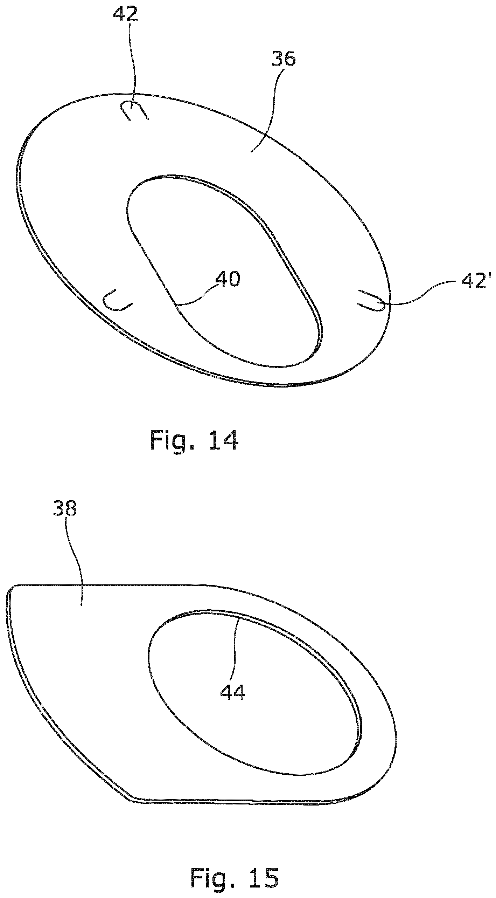

In the embodiment illustrated in figure 14, the first cover element 36 comprises a circular plate, which may for example be made of stainless steel or another suitable material. The first cover element 36 is larger than the drain aperture 30 with which it is associated, so that it completely covers the aperture. For example, in the illustrated embodiment the first cover element has a diameter of 135mm, and the drain aperture has a diameter of 120mm.

The first cover element 36 includes an elongate slot 40 that extends outwards from the centre of the first cover element. The elongate slot 40 may for example extend radially from the centre of the first cover element 36 towards its edge. The ends of the slot 40 may be rounded.

The drain cover 34 may include a fastener 42 that fastens the drain cover to the base element 4. In the illustrated embodiment the fastener 42 comprises a plurality of tabs 42' formed by making U-shaped cuts in the first cover element 36. The tabs 42' are then bent out of the plane of the first cover element 36 so that they protrude slightly from the lower face of the first cover element 36.

In the illustrated embodiment the sink strainer 2 is assembled by aligning the tabs 42' with the cut-outs 32 and then bringing the adjacent faces of the first cover element 36 and the base element 4 into contact, so that the tabs 42' pass through the cut-outs 32. The drain cover 34 is then fastened in position by rotating the first cover element 36, so that the tabs 42' engage the lower surface of the base element 4.

The second cover element 38 may for example take the form illustrated in figure 15. The second element 38 includes a mounting aperture 44 for an upstand strainer S, which may for example be of the type described in US6276000, or similar. In the illustrated embodiment the second cover element 38 comprises a plate, which may be made for example of stainless steel, and has first and second ends and two parallel sides. The mounting aperture 44 comprises a circular hole that extends through the second cover element 38 and is located towards one end thereof.

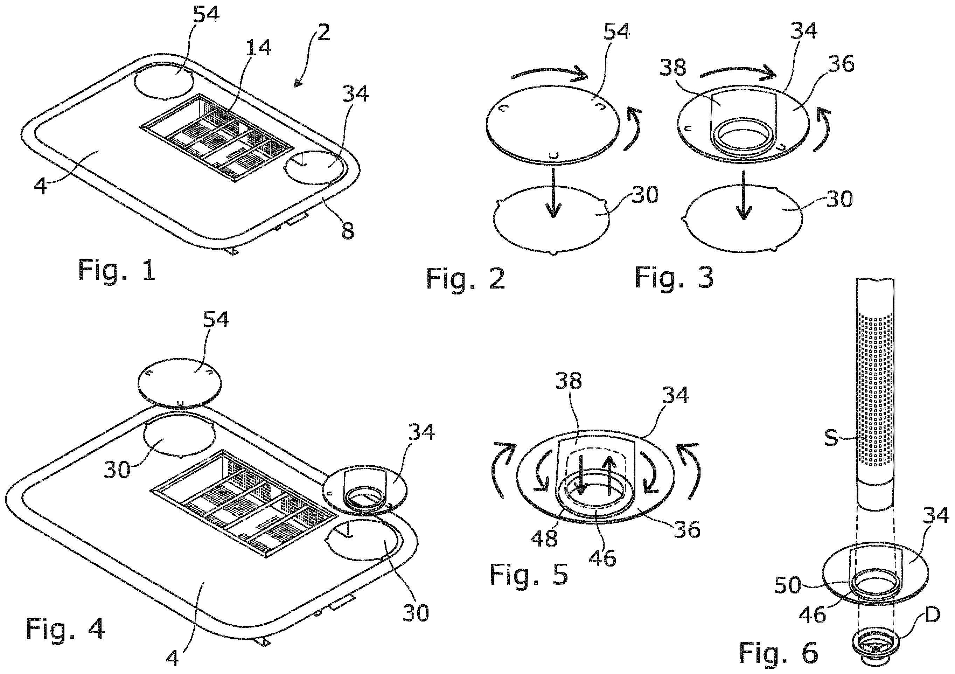

In the assembled drain cover 34 the second cover element 38 may be located on top of the first cover element 36, for example as illustrated in figure 5. The sink strainer 2 may include a connector 46 that connects the first cover element 36 to the second cover element 38 and maintains the mounting aperture 44 in alignment with the elongate slot 40. The connector 46 may for example comprise an annular grommet made of rubber or another suitable material, having an external peripheral groove 48 that engages the edges of the slot 40 and the mounting aperture 44. The connector 46 can slide longitudinally along the elongate slot 40, whereby the second cover element 38 is configured for linear movement relative to the first cover element 36 in the direction of the elongate slot 40.

The drain cover 34 includes a drain cover seal 50 within the mounting aperture 44, wherein the drain cover seal 50 is configured to provide a seal with an upstand strainer S received within the mounting aperture 44. In the illustrated embodiment, the grommet 46 serves as the drain cover seal 50 and has a central aperture 52 through which the upstand strainer S passes as illustrated in figure 6. The internal diameter of the central aperture 52 is matched to the external diameter of the upstand strainer S to provide a seal. The lower end of the upstand strainer S passes through the grommet 46 and is located within the sink waste drain D.

As mentioned above, the sink strainer 2 may include either one drain aperture 30 or a plurality of drain apertures. If it has a plurality of drain apertures 30 the sink strainer 2 may also include at least one drain closure 54 that is configured to be removably associated with one of the drain apertures 30 to temporarily close the drain aperture.

In the illustrated embodiment the drain closure 54 comprises a circular plate having a diameter larger than that of the drain aperture 30, so that it can cover the drain aperture. The drain closure 54 may include a drain closure fastener 56 for fastening the drain closure to the base element 4. The drain closure fastener 56 may for example consist of a plurality of tabs, which may be similar to the tabs 42' of the first cover element 36.

In use, the sink strainer 2 is located within the bowl of a sink. The sink strainer 2 is supported on the base of the sink by the supports 10, so that the base element 4 is located slightly above the base of the sink bowl. The base seal 8 provides a seal against the sides of the sink bowl, to prevent food waste from entering the space beneath the base element 4.

If the sink has a single drain aperture, the drain cover 34 is fastened to the base element over the drain aperture by locating the tabs 42' in line with the cut-outs 32 and then rotating the first cover element 36, as described above. If the sink strainer 2 has two or more drain apertures 30, the drain cover 34 is located to cover the drain aperture 30 that is aligned with the sink waste drain D. The other drain aperture (or the other drain apertures) is covered by fastening a drain closure 54 to the base element, to close the other drain aperture 30.

The drain cover 34 is adjustable to ensure that the upstand strainer S is correctly aligned with the sink waste drain D. The first cover element 36 is configured for rotation relative to the base element 4, and the second cover element 38 is configured for linear movement relative to the first cover element 36. Accordingly, the position of the mounting aperture 44 can be adjusted in a rotational and linear directions relative to the base element 4 by adjusting the positions of the first cover element 36 and the second cover element 38. This allows the plug upstand strainer S to be aligned correctly with the sink waste drain D.

During use, water flow out of the sink through the waste drain D is controlled by the upstanding strainer S in a conventional manner. When the valve in the upstand strainer S is closed water cannot flow through the upstand strainer into the waste drain. When the valve is opened, water flows through the upstanding strainer into the waste drain.

Food waste within the waste water is unable to past through the perforations in the upstand strainer S and collects in the strainer element 14 of the sink strainer 2. Once all the water has flowed away through the waste drain D, the strainer element 14 can be removed and any food waste that has collected can be emptied into a waste bin. Thus, the sink strainer effectively prevents food waste from entering the drain and allows the waste to be removed and disposed of quickly and easily.

## Claims

1. A sink strainer (2) for a sink having a drain, the strainer comprising:
a. a base element (4) configured to be located within a sink bowl,
b. a strainer element (14) having one or more perforations (16),
c. and a drain cover (34) covering a drain aperture (30) in the base element,
d. wherein the drain cover (34) includes a first over element (36) configured for rotation relative to the base element,
**characterised by**
e. a second cover element (38) configured for linear movement relative to the first cover element (36),
f. wherein the first cover element (36) includes an elongate slot (40) that extends outwards from the centre of the first cover element,
g. and wherein the second cover element (38) includes a mounting aperture (44) for an upstand strainer,
h. whereby the position of the mounting aperture (44) can be adjusted in rotational and linear directions relative to the base element (4) by adjusting the positions of the first cover element (36) and the second cover element (38).

2. A sink strainer according to claim 1, wherein the second cover element (38) is configured for linear movement relative to the first cover element (36) in the direction of the elongate slot.

3. A sink strainer according to claim 2, including a connector (46) that connects the first cover element (36) to the second cover element (38), and maintains the mounting aperture (44) in alignment with the elongate slot (40).

4. A sink strainer according to any preceding claim, wherein the drain cover includes a drain cover seal (50) within the mounting aperture (44), wherein the drain cover seal is configured to provide a seal with an upstand strainer received in the mounting aperture (44).

5. A sink strainer according to any preceding claim, wherein the drain cover includes a drain cover fastener (56) that fastens the drain cover to the base element.

6. A sink strainer according to claim 5, wherein the drain cover fastener (56) is releasable to enable detachment of the drain cover from the base element (4).

7. A sink strainer according to any preceding claim, wherein the base element (4) comprises a plurality of drain apertures (30).

8. A sink strainer according to claim 7, including at least one removeable drain closure (54) configured to close one of the drain apertures (30).

9. A sink strainer according to claim 8, wherein the drain closure (54) includes a drain closure fastener (56) for fastening the drain closure to the base element, and optionally wherein the drain closure fastener is releasable to enable detachment of the drain closure from the base element.

10. A sink strainer according to any preceding claim, wherein the base element (4) comprises a plate having a peripheral edge (6).

11. A sink strainer according to claim 10, wherein the base element (4) is configured so that when the base element is located within a sink bowl the peripheral edge (6) is located adjacent one or more sides of the sink bowl.

12. A sink strainer according to claim 11, including a base seal (8) mounted around the peripheral edge of the base element, wherein the base seal is configured to provide a seal with one or more sides of the sink bowl.

13. A sink strainer according to any preceding claim, including one or more supports (10) provided on an underside of the base element (4).

14. A sink strainer according to any preceding claim, wherein the strainer element (14) is removably mounted within a strainer window (26) in the base element.

15. A sink strainer according to any preceding claim, wherein the strainer element (14) comprises a basket.

## Patentansprüche

1. Spülbeckensieb (2) für ein Spülbecken, das einen Ablauf aufweist, das Sieb umfassend:
a. ein Basiselement (4), das konfiguriert ist, um sich in einem Spülbecken zu befinden,
b. ein Siebelement (14), das eine oder mehrere Perforationen (16) aufweist, und
c. eine Ablaufabdeckung (34), der eine Ablauföffnung (30) in dem Basiselement abdeckt,
d. wobei die Ablaufabdeckung (34) ein erstes Abdeckelement (36) beinhaltet, das für eine Drehung in Bezug auf das Basiselement konfiguriert ist,
**gekennzeichnet durch**
e. ein zweites Abdeckelement (38), das für eine lineare Bewegung in Bezug auf das erste Abdeckelement (36) konfiguriert ist,
f. wobei das erste Abdeckelement (36) einen länglichen Schlitz (40) beinhaltet, der sich von der Mitte des ersten Abdeckelements nach außen erstreckt, und
g. wobei das zweite Abdeckelement (38) eine Montageöffnung (44) für ein Aufsatzsieb beinhaltet,
h. wobei die Position der Montageöffnung (44) durch Verstellen der Positionen des ersten Abdeckelements (36) und des zweiten Abdeckelements (38) in Dreh- und Linearrichtung in Bezug auf das Basiselement (4) eingestellt werden kann.

2. Spülbeckensieb nach Anspruch 1, wobei das zweite Abdeckelement (38) für eine lineare Bewegung in Bezug auf das erste Abdeckelement (36) in Richtung des länglichen Schlitzes konfiguriert ist.

3. Spülbeckensieb nach Anspruch 2, das einen Verbinder (46) beinhaltet, der das erste Abdeckelement (36) mit dem zweiten Abdeckelement (38) verbindet und die Montageöffnung (44) in Ausrichtung mit dem länglichen Schlitz (40) hält.

4. Spülbeckensieb nach einem vorherigen Anspruch, wobei die Ablaufabdeckung eine Ablaufabdeckungsdichtung (50) innerhalb der Montageöffnung (44) beinhaltet, wobei die Ablaufabdeckungsdichtung konfiguriert ist, um eine Dichtung mit einem Aufsatzsieb zu bilden, das in der Montageöffnung (44) aufgenommen ist.

5. Spülbeckensieb nach einem vorherigen Anspruch, wobei die Ablaufabdeckung ein Ablaufabdeckung-Befestigungsmittel (56) beinhaltet, das die Ablaufabdeckung an dem Basiselement befestigt.

6. Spülbeckensieb nach Anspruch 5, wobei das Ablaufabdeckung-Befestigungsmittel (56) der Ablaufabdeckung lösbar ist, um ein Abnehmen der Ablaufabdeckung von dem Basiselement (4) zu ermöglichen.

7. Spülbeckensieb nach einem vorherigen Anspruch, wobei das Basiselement (4) eine Vielzahl von Ablauföffnungen (30) umfasst.

8. Spülbeckensieb nach Anspruch 7, das mindestens einen abnehmbaren Ablaufverschluss (54) beinhaltet, der zum Verschließen einer der Ablauföffnungen (30) konfiguriert ist.

9. Spülbeckensieb nach Anspruch 8, wobei der Ablaufverschluss (54) ein Ablaufverschluss-Befestigungsmittel (56) zum Befestigen des Ablaufverschlusses an dem Basiselement umfasst, und wobei das Ablaufverschluss-Befestigungsmittel optional lösbar ist, um ein Abnehmen des Ablaufverschlusses von dem Basiselement zu ermöglichen.

10. Spülbeckensieb nach einem vorherigen Anspruch, wobei das Basiselement (4) eine Platte umfasst, die einen Umfangsrand (6) aufweist.

11. Spülbeckensieb nach Anspruch 10, wobei das Basiselement (4) konfiguriert ist, um, wenn sich das Basiselement in einem Spülbecken befindet, der Umfangsrand (6) an eine oder mehrere Seiten des Spülbeckens angrenzt.

12. Spülbeckensieb nach Anspruch 11, das eine Basisdichtung (8) beinhaltet, die um den Umfangsrand des Basiselements montiert ist, wobei die Basisdichtung konfiguriert ist, um eine Dichtung mit einer oder mehreren Seiten des Spülbeckens bereitzustellen.

13. Spülbeckensieb nach einem vorherigen Anspruch, das eine oder mehrere Stützen (10) beinhaltet, die an einer Unterseite des Basiselements (4) bereitgestellt sind.

14. Spülbeckensieb nach einem vorherigen Anspruch, wobei das Siebelement (14) abnehmbar in einem Siebfenster (26) in dem Basiselement montiert ist.

15. Spülbeckensieb nach einem vorherigen Anspruch, wobei das Siebelement (14) einen Korb umfasst.

## Revendications

1. Filtre pour évier (2) destiné à un évier possédant un drain, le filtre comprenant :
a. un élément de base (4) conçu pour être situé à l'intérieur d'une cuvette d'évier,
b. un élément de filtre (14) présentant une ou plusieurs perforations (16),
c. et un couvercle de drain (34) recouvrant une ouverture de drain (30) dans l'élément de base,
d. ledit couvercle de drain (34) comprenant un premier élément de couvercle (36) conçu pour tourner par rapport à l'élément de base,
**caractérisé par**
e. un second élément de couvercle (38) conçu pour un déplacement linéaire par rapport au premier élément de couvercle (36),
f. ledit premier élément de couvercle (36) comprenant une fente allongée (40) qui s'étend vers l'extérieur à partir du centre du premier élément de couvercle,
g. et ledit second élément de couvercle (38) comprenant une ouverture de montage (44) pour un filtre vertical,
h. moyennant quoi la position de l'ouverture de montage (44) peut être réglée dans des directions de rotation et linéaires par rapport à l'élément de base (4) en réglant les positions du premier élément de couvercle (36) et du second élément de couvercle (38).

2. Filtre pour évier selon la revendication 1, ledit second élément de couvercle (38) étant conçu pour un mouvement linéaire par rapport au premier élément de couvercle (36) dans la direction de la fente allongée.

3. Filtre pour évier selon la revendication 2, comprenant un connecteur (46) qui relie le premier élément de couvercle (36) au second élément de couvercle (38), et maintient l'ouverture de montage (44) en alignement avec la fente allongée (40).

4. Filtre pour évier selon une quelconque revendication précédente, ledit couvercle de drain comprenant un joint d'étanchéité (50) de couvercle de drain à l'intérieur de l'ouverture de montage (44), ledit joint d'étanchéité de couvercle de drain étant conçu pour fournir un joint d'étanchéité avec un filtre vertical reçu dans l'ouverture de montage (44).

5. Filtre pour évier selon une quelconque revendication précédente, ledit couvercle de drain comprenant une élément de fixation (56) de couvercle de drain qui fixe le couvercle de drain à l'élément de base.

6. Filtre pour évier selon la revendication 5, ledit élément de fixation (56) de couvercle de drain étant amovible pour permettre le détachement du couvercle de drain de l'élément de base (4).

7. Filtre pour évier selon une quelconque revendication précédente, ledit élément de base (4) comprenant une pluralité d'ouvertures de drain (30).

8. Filtre pour évier selon la revendication 7, comprenant au moins une fermeture de drain amovible (54) conçue pour fermer l'une des ouvertures de drain (30).

9. Filtre pour évier selon la revendication 8, ladite fermeture de drain (54) comprenant un élément de fixation (56) de fermeture de drain destiné à fixer la fermeture de drain à l'élément de base, et éventuellement ledit élément de fixation de fermeture de drain pouvant être libéré pour permettre le détachement de la fermeture de drain de l'élément de base.

10. Filtre pour évier selon une quelconque revendication précédente, ledit élément de base (4) comprenant une plaque possédant un bord périphérique (6).

11. Filtre pour évier selon la revendication 10, ledit élément de base (4) étant conçu afin que lorsque l'élément de base est situé à l'intérieur d'une cuvette d'évier, le bord périphérique (6) soit situé adjacent à un ou plusieurs côtés de la cuvette d'évier.

12. Filtre pour évier selon la revendication 11, comprenant un joint d'étanchéité de base (8) monté autour du bord périphérique de l'élément de base, ledit joint d'étanchéité de base étant conçu pour fournir un joint d'étanchéité avec un ou plusieurs côtés de la cuvette d'évier.

13. Filtre pour évier selon une quelconque revendication précédente, comprenant un ou plusieurs supports (10) prévus sur une face inférieure de l'élément de base (4).

14. Filtre pour évier selon une quelconque revendication précédente, ledit élément de filtre (14) étant monté de manière amovible à l'intérieur d'une fenêtre de filtre (26) dans l'élément de base.

15. Filtre pour évier selon une quelconque revendication précédente, ledit élément de filtre (14) comprenant un panier.
